# FASCICULE DE BREVET EUROPEEN

(11) **EP 0 470 875 B1**
(45) Date de publication et mention de la délivrance du brevet: **08.03.1995**
(21) Numéro de dépôt: 91401971.6
(22) Date de dépôt: 15.07.1991
(51) Int. Cl.: H04L 29/06

(54) **Contrôleur de communication entre un ordinateur et une pluralité de terminaux de type RNIS**
Fernmeldesteuerungsanordnung zwischen einem Rechner und einer Mehrheit von ISDN-artigen Endgeräten
Communication controller between a computer and a plurality of ISDN terminals

(30) Priorité: 09.08.1990 FR 9010179
(43) Date de publication de la demande: 12.02.1992
(73) Titulaire: BULL S.A., 92800 Puteaux (FR)
(72) Inventeur: Gauthier, Bernard, F-78360 Montesson (FR); Lebreton, Marc, F-78560 Le Port-Marly (FR); Le Gallo, Rémy, F-78150 Le Chesnay (FR)
(74) Mandataire: Gouesmel, Daniel

(56) Documents cités:
- EP-A- 0 289 248
- US-A- 4 325 119
- US-A- 4 509 113
- US-A- 4 642 755
- US-A- 4 700 340

## Description

La présente invention concerne un contrôleur de communication entre un ordinateur et une pluralité de terminaux, reliés entre eux par l'intermédiaire d'une liaison numérique multiplexée temporellement. Elle est plus particulièrement applicable aux liaisons numériques de type S₀ utilisées dans les réseaux de type RNIS (réseaux numériques à intégration de service, également désignés sous leur sigle anglo-saxon ISDN).

Les réseaux de transmission de données, encore appelés réseaux de télécommunication ou réseaux de communication, sont constitués par une pluralité d'unités, généralement appelés "équipement terminal de traitement de données", en abrégé, ETDD, (Data Terminal Equipment, en langue anglaise, en abrégé DTE). Ces derniers sont encore appelés terminaux ou stations par commodité de langage. On considère qu'un ordinateur relié à un tel réseau est un terminal. Les terminaux communiquent entre eux par l'intermédiaire d'une ligne de transmission. Celle-ci est constituée par exemple par deux paires de fils téléphoniques (l'une pour l'émission, l'autre pour la réception), ce qui est le cas pour la liaison de type S₀, dont il est rappelé qu'elle est définie par l'avis X431 du CCITT (Comité Consultatif International Télégraphique Téléphonique).

Les différents terminaux d'un réseau émettent des messages d'information et reçoivent ceux émis par les autres. Un message est constitué par un ensemble de blocs élémentaires d'information comprenant un nombre déterminé d'informations binaires. Ces blocs élémentaires sont appelés trames. Chaque trame est structurée et comporte des informations définissant le début et la fin de celle-ci, l'adresse du terminal auquel est destiné le message, l'adresse du terminal émetteur, la longueur des données, les données utiles, etc ... .

L'une des tendances actuelles du développement technologique dans le domaine des réseaux de transmission de données est le regroupement du trafic téléphonique et des transmissions de données et plus généralement de l'ensemble du trafic numérique sur une infrastructure commune. Ceci est dû essentiellement à l'introduction progressive des techniques numériques dans le domaine de la téléphonie. Ceci est l'objectif du réseau numérique à intégration de données RNIS.

Le RNIS est utilisé désormais principalement en Europe et plus particulièrement en France. La liaison de communication de type S₀, encore appelée interface S₀ fait partie des liaisons normalisées que comporte le RNIS. Elle est plus particulièrement utilisée pour les communications entre ordinateurs et terminaux.

Une liaison LS₀ de ce type possède un débit de deux fois 144 kilobits par seconde (ou encore Kbs) soit 288 Kbs (144 kbs dans chaque sens, émission et réception) et comporte 3 canaux distincts, à savoir 2 canaux de type B pour la transmission des données avec un débit de 64 Kbs, et un canal de type D de signalisation à 16 Kbs. Le principe de la liaison LS₀ est le multiplexage temporel. La manière dont ce dernier s'effectue est définie dans l'avis X431 précité.

On sait qu'un ordinateur est constitué d'une part, d'un ou plusieurs processeurs centraux, de processeurs d'entrée/sortie, de mémoires vives et mémoires mortes associées à l'ensemble de ces processeurs, de contrôleurs d'entrée/sortie, l'ensemble de tous ces éléments formant ce que les hommes de métier appellent communément un système hôte ou plus simplement hôte, d'autre part de différents organes périphériques tels que des mémoires à disque ou des périphériques d'entrée/sortie permettant l'échange de données avec l'extérieur (terminaux à écran, imprimantes, etc ...), ces organes périphériques étant associés à des contrôleurs de périphériques.

L'ensemble des éléments constitutifs précités (en dehors des périphériques) est disposé sur un ensemble de cartes (boards, en anglais) dont les dimensions sont normalisées.

Ces cartes sont reliées généralement à un même bus de type parallèle qui assure les communications entre les différents processeurs et le transport des données entre les différentes cartes ainsi que l'alimentation électrique de celles-ci.

Un bus couramment utilisé dans la pratique actuelle est le bus appelé MULTIBUS II dont la marque est déposée par la Société INTEL. L'architecture d'un tel bus est structurée autour d'un bus principal de type parallèle normalisé suivant la norme IEEE 1296 (Institute of Electrical and Electronic Engineers). Ce bus principal est désigné par PSB.

La tendance du développement technologique des réseaux, l'utilisation de terminaux de plus en plus nombreux conduit à développer au sein même des ordinateurs des contrôleurs de communication programmés, dont le rôle est de réduire la charge de l'unité centrale de l'ordinateur en effectuant une partie de la gestion d'une part des messages émis par les différents terminaux appartenant à l'ordinateur vers le réseau de télécommunication auquel cet ordinateur est relié et d'autre part des messages provenant des terminaux du réseau. Dans la pratique courante, un tel contrôleur de communication est réalisé autour d'un microprocesseur connecté à une ou plusieurs mémoires, qui comprend un logiciel de base (plus simple que celui de l'unité centrale) contenant des modules spécialisés permettant de gérer le bus commun aux différents éléments constitutifs de l'ordinateur et la ligne de transmission du réseau, et ayant des facilités pour constituer les files d'attente de message (dans la mémoire associée au microprocesseur). Ce logiciel doit en outre permettre l'exécution simultanée d'un grand nombre de processus et pour cela gérer rapidement de nombreuses interruptions, ce qui implique des mécanismes de changement de contexte du microprocesseur très performants, ainsi que des niveaux multiples d'interruption. Un tel logiciel, qu'on peut appeler logiciel de communication, est par exemple le logiciel appelé CNS utilisé dans les produits de la série DN-7XXX de la Société BULL S.A., et également dans les produits CNS-A₀ et CNS-A₁ de la série d'ordinateurs DPS-7000 de la même Société.

Dans le cas où l'ordinateur comprend un bus de type MULTIBUS II, le processeur de communication lui est relié. Il est disposé sur une carte connectée au bus PSB par l'intermédiaire d'un coprocesseur par exemple, de type MPC 82309 (fabriqué par la Société INTEL) communiquant par mode message avec les autres éléments constitutifs fonctionnels de l'ordinateur.

US-A-4 325 119 décrit un contrôleur dans lequel une unité de base reliée au bus et une partie périphérique établissant la liaison entre l'unité de base et les terminaux sont contrôlées par un seul processeur MLCP.

L'interface de type S₀ étant encore récente, il n'existe pratiquement pas de contrôleur de communication relié à un MULTIBUS II d'une part, et gérant une ou plusieurs de ces interfaces d'autre part.

La présente invention concerne précisément un contrôleur de communication entre au moins un système hôte associé à un bus et une pluralité de terminaux, reliés entre eux par l'intermédiaire d'une liaison de type S₀, permettant de traiter simultanément le transfert d'un grand nombre de trames sur chacun des canaux de la liaison, avec un débit adapté à celui de la liaison.

Selon l'invention, le contrôleur de communication entre au moins un système hôte associé à un bus et une pluralité de terminaux d'au moins un réseau (RE₁-RE₂), reliés entre eux par l'intermédiaire d'au moins une liaison numérique multiplexée temporellement comprenant une pluralité n de canaux de données gérés selon des protocoles déterminés et supportés par au moins une ligne de transmission, comprenant :
- une unité de base reliée au bus, qui gère et effectue le transfert des trames sur l'ensemble des canaux de la liaison,
- une unité périphérique reliée d'une part à l'unité de base et d'autre part à la ligne de transmission, assurant le multiplexage et le démultiplexage temporel des différents canaux de données, transmettant les données vers le réseau ou les recevant de celui-ci,
   est caractérisé en ce que l'unité de base comprend :
- un premier processeur de commandes de transfert des trames depuis l'hôte vers le réseau et réciproquement, connecté au bus et associé à une première mémoire de stockage des trames avant leur transfert, qui gère le transfert des trames vers les différents canaux affectés à celles-ci,
- un second processeur communiquant avec le premier effectuant le transfert de chacune des trames, canal par canal, depuis la première mémoire jusqu'à la partie périphérique puis le réseau, et réciproquement,
- la partie périphérique comprenant un coupleur pour l'ensemble des canaux piloté par le second processeur, relié à la ligne de transmission, et recevant les données de chaque trame, paquet par paquet (buffer par buffer), provenant de ou allant vers la première mémoire, assurant le multiplexage ou démultiplexage des données à l'émission ou à la réception.

D'autres caractéristiques et avantages de la présente invention apparaîtront dans la description suivante donnée à titre d'exemple non limitatif et en se référant aux dessins annexés.

Sur ces dessins :
- **La figure 1** est un schéma très simplifié de l'ordinateur comportant le contrôleur de communication selon l'invention,
- **La figure 2** montre la structure matérielle du contrôleur de communication selon l'invention,
- **La figure 3** montre le schéma de la partie périphérique du contrôleur de communication selon l'invention,
- **La figure 4** montre la structure de l'ensemble logiciel et micrologiciel du contrôleur de communication selon l'invention,
- **La figure 5** est formée des figures 5a et 5b. La figure 5a est un organigramme simplifié du fonctionnement d'un module micrologiciel affecté à un canal de données de la liaison LS₀, permettant le transfert de trames sur ce canal, alors que la figure 5b montre la structure simplifiée du module micrologiciel dont l'organigramme simplifié est montré à la figure 5a,
- **La figure 6** montre le mécanisme suivant lequel le logiciel et chacun des micrologiciels affectés à chacun des canaux communiquent entre eux,
- **Les figures 7, 8, 9** illustrent le fonctionnement du contrôleur de communication selon l'invention, lors de l'émission ou la réception de trames, c'est-à-dire lors de l'envoi de trames depuis l'ordinateur vers le réseau utilisant la liaison de communication LS₀, et réciproquement,
- **La figure 10 et la figure 11** sont des chronogrammes relatifs aux différentes opérations successives effectuées par le contrôleur de communication selon l'invention, d'une part à l'émission et d'autre part à la réception de trames.

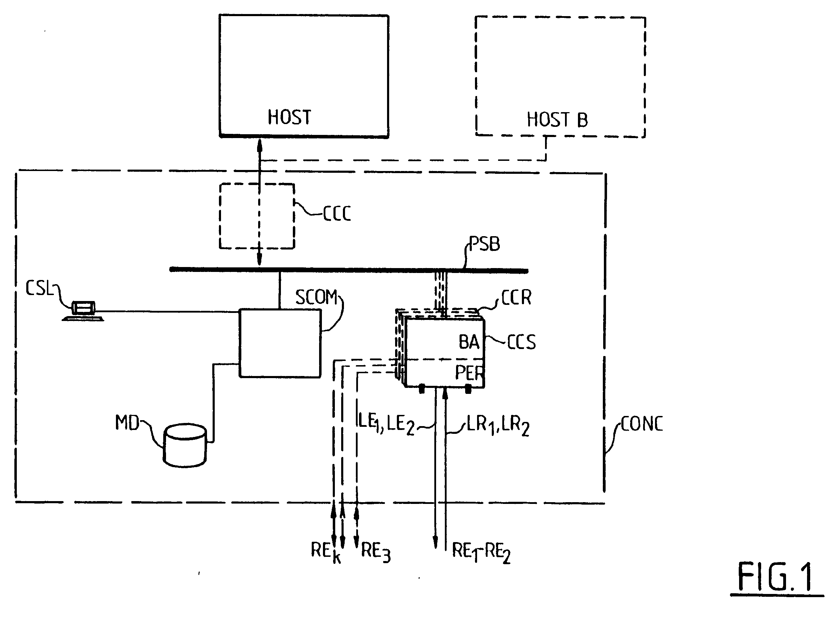

On considère la figure 1 qui montre un système informatique ORD relié à un ensemble de k réseaux de types différents, RE₁, RE₂, ..., REₖ par l'intermédiaire d'une pluralité de k liaisons de types différents.

La structure de l'ordinateur ORD montrée à la figure 1 a été volontairement simplifiée et comprend :
- le système hôte HOST constituant son système central,
- un concentrateur CONC de liaisons de réseaux gérant et effectuant le transfert de trames de l'hôte vers ces réseaux et réciproquement. Ce concentrateur est encore appelé concentrateur de lignes de réseaux. Il convient de noter que ce dernier peut également relier, d'autre hôtes que HOST aux réseaux RE₁ à REₖ, par exemple l'hôte HOSTB représenté en traits interrompus à la figure 1.

Le concentrateur comprend :
- une unité centrale SCOM qui administre et gère le concentrateur. Elle charge notamment tous les logiciels et micrologiciels associés à chacune des cartes constituant le concentrateur dans celles-ci, lors de leur initialisation.
- le bus PSB, de préférence de type MULTIBUS II,
- un ensemble CCR de contrôleurs de communication permettant de relier le concentrateur (et par suite HOST) aux différents réseaux REₖ. Il comprend le contrôleur de communication selon l'invention CCS permettant de le relier, dans l'exemple de réalisation décrit ici, à deux réseaux RNIS RE₁-RE₂ utilisant chacun une liaison de communication de type S₀.

Le concentrateur CONC est ici considéré comme terminal des deux réseaux RE₁-RE₂, communiquant avec les autres terminaux des deux réseaux RE₁-RE₂.

L'hôte peut être relié soit directement au bus PSB, par l'intermédiaire d'un coprocesseur MPC 82309, soit par l'intermédiaire d'un coupleur central de communication CCC, surtout dans le cas où plusieurs hôtes sont reliés au concentrateur CONC (CCC est représenté en pointillé à la figure 1).

Les trames provenant de l'hôte HOST destinées aux réseaux RE₁-RE₂ parviennent par l'intermédiaire de PSB au contrôleur de communication CCS. Celui-ci divise chacune de celles-ci en une pluralité de paquets de données (le terme anglo-saxon correspondant à paquet de données est buffer. L'un ou l'autre de ces termes sera indifféremment employé dans la suite du texte), gère et effectue le transfert de cet ensemble de trames sur les différents canaux de données des deux liaisons de type S₀. Ces données sont multiplexées temporellement par le contrôleur CCS. Le contrôleur CCS effectue donc le multiplexage des trames envoyées par l'hôte HOST aussi bien pour l'une que pour l'autre des deux liaisons de type S₀. Du point de vue fonctionnel, on considèrera donc dans la suite du texte que ces deux liaisons de type S₀ se comportent comme une seule liaison comprenant les canaux B₁ et B₂ de type B et D₁ de type D pour la première, et B₃ et B₄ de type B et D₂ de type D pour la seconde. Pour simplifier, les canaux B₁, B₂, D₁, B₃, B₄, D₂ seront désignés respectivement par C₁ à C₆ dans la suite du texte.

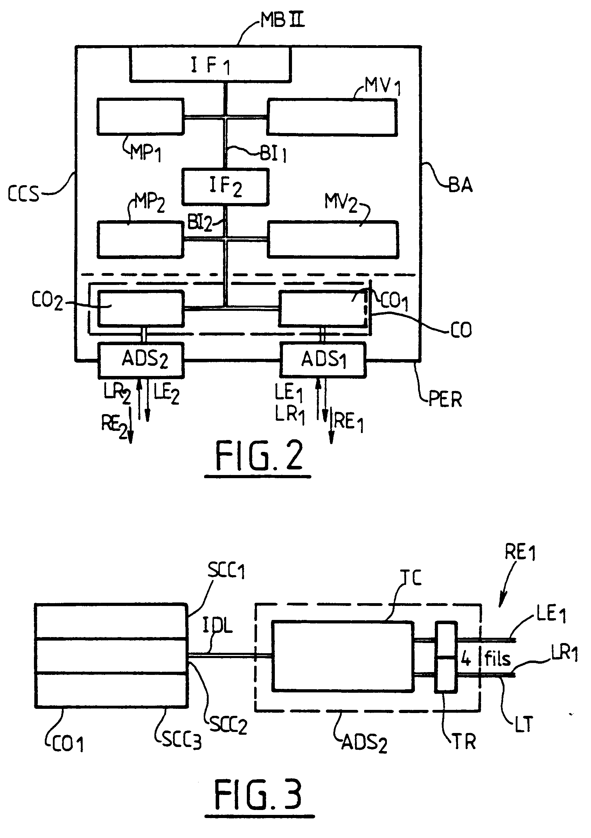

On considère désormais les figures 2 et 3.

Le contrôleur de communication CCS selon l'invention comprend, ainsi qu'on peut le voir à la figure 2, une unité de base BA et une unité périphérique PER.

L'unité de base BA comprend :
- une interface IF₁ avec le bus PSB, de type MULTIBUS II, définie par la norme IEEE P 1296, par exemple constituée par le MPC 82309 (voir plus haut),
- un premier microprocesseur MP₁ de type 68030 de la Société MOTOROLA, associé à une première mémoire vive MV₁, de quatre mégaoctets de capacité,
- un second microprocesseur MP₂, associé à une seconde mémoire vive MV₂ de 512 kilooctets de mémoire, qui fonctionne en mode maître,
- une interface IF₂ permettant le dialogue entre le premier et second microprocesseurs MP₁ et Mp₂, assurant l'adaptation physique des signaux transitant sur le bus interne BI₁ du premier microprocesseur MP₁ avec ceux qui transitent sur le bus interne BI₂ du second microprocesseur MP₂.

L'unité périphérique PER comprend :
- un coupleur CO piloté par le second microprocesseur MP₂ de l'unité de base BA,
- un premier et un second dispositif de connexion physique respectivement au premier réseau RE₁ et au second réseau RE₂, à savoir ADS₁ et ADS₂.

Le coupleur CO est en fait composé de deux coupleurs identiques CO₁et CO₂ qui dans l'exemple de réalisation du contrôleur de communication selon l'invention sont formés par trois contrôleurs de communication série appartenant chacun à la partie périphérique d'un microcontrôleur 68302 de la Société MOTOROLA. (On sait qu'un microcontrôleur 68302 est en fait formé par l'association d'un microprocesseur 68000 et d'une partie périphérique formée de contrôleurs de communication série). Ainsi, le contrôleur CO₂ est formé par les trois contrôleurs de communication série SCC₄, SCC₅, SCC₆ (voir également figure 3) d'un microcontrôleur 68302 dont le microprocesseur 68000 n'est autre que MP₂, alors que le contrôleur CO₁ constitue la partie périphérique formée de trois contrôleurs de communication série SCC₁, SCC₂, SCC₃ d'un second microcontrôleur 68302 dont le microprocesseur 68000 n'est pas utilisé.

Ainsi qu'on peut le voir à la figure 3, le coupleur CO₁ est connecté au réseau RE₁, c'est-à-dire aux lignes téléphoniques LE₁ et LR₁ par l'intermédiaire du dispositif de connexion physique ADS₂ formé par le circuit émetteur-récepteur TC, (encore appelé transceiver selon la terminologie anglo-saxonne) et le transformateur TR. Le transceiver de type S₀ est un circuit de type MC145474 de la Firme MOTOROLA.

Le coupleur CO₁ est relié au transceiver TC par l'intermédiaire d'une interface dite IDL (Inter Chip Data Link).

Les grandes lignes du fonctionnement du contrôleur de communication CCS sont les suivantes :

Le premier processeur MP₁ commande le transfert des trames émises par l'hôte HOST destinées à l'un ou l'autre des deux réseaux RE₁ ou RE₂ : A ce titre, il reçoit les trames qui proviennent du bus PSB, et les stocke dans sa mémoire vive MV₁ en attendant que celles-ci soient réellement transférées vers l'un ou l'autre des deux réseaux précités. Réciproquement, il reçoit dans sa mémoire vive MV₁ les trames provenant de l'un ou l'autre de ces deux réseaux, avant de les envoyer via le bus PSB vers l'hôte HOST. Le premier processeur découpe chacune des trames en une pluralité de paquets de données (buffers) tels que BF₁, BF₂, ..., BFₙ. MP₁ alloue à chacun de ceux-ci un emplacement physique déterminé, totalement aléatoire, dans la mémoire vive MV₁. Dès que l'un des canaux de données C₁ à C₆ (voir plus haut) est disponible, le premier processeur demande au second processeur MP₂ d'effectuer le transfert de la trame en question depuis la mémoire vive MV₁ vers le coupleur CO₁ puis le réseau RE₁ ou RE₂ à travers les bus internes BI₁, BI₂ et l'interface IF₂, dans le canal approprié, par exemple C₁. Il est clair que le premier processeur MP₁ procède de même avec chacune des trames, pour chacun des canaux C₁ à C₆. En d'autres termes, le premier processeur MP₁ gère le transfert de chacune des trames qu'il reçoit du PSB ou de l'un des deux réseaux RE₁-RE₂, à travers les différents canaux C₁ à C₆ affectés à chacune et ce tant à l'émission qu'à la réception. Il est clair, qu'en réception, des emplacements physiques en MV₁ sont alloués, également de manière aléatoire par MP₁, aux différents buffers BF₁₁, BF₁₂, ..., BFₘ de chaque trame, ces emplacements étant différents de ceux alloués à BF₁ ... BFₙ. A l'émission, le second processeur MP₂, ayant reçu la demande de transfert de la part du premier processeur MP₁, effectue le transfert de la trame en question, buffer par buffer, dans le canal qui a été affecté à celle-ci, depuis la première mémoire MV₁ jusqu'à la partie périphérique PER.

En réception, MP₂ effectue le transfert de la trame provenant de l'un des deux réseaux RE₁-RE₂ dans le canal approprié, buffer par buffer, depuis la partie périphérique jusqu'à MV₁.

La partie périphérique PER, par exemple par l'intermédiaire du premier coupleur CO₁, va chercher les buffers de la trame en question dans MV₁ et les transfère sur le réseau RE₁ ou RE₂ par l'intermédiaire du contrôleur de communication série SCCᵢ associé au canal affecté à la trame émise. En réception, MP₂ effectue le transfert, buffer par buffer, dans le canal approprié, de la partie périphérique vers MV₁. Dans l'exemple de réalisation préférée de l'invention décrit ici, le contrôleur de communication série SCCᵢ peut gérer au maximum 8 buffers simultanément aussi bien en émission qu'en réception. Ce dernier reçoit les buffers en parallèle, s'ils proviennent de la mémoire MV₁ ou en série s'ils proviennent du réseau RE₁- RE₂. Il les sérialise ou dessérialise suivant le cas. Le coupleur CO₁ assure le multiplexage ou démultiplexage des données reçues par les différents contrôleurs de communication série SCC₁ à SCC₆. En effet, le coupleur CO₁ peut recevoir simultanément sur chacun de ses contrôleurs plusieurs trames, ou plus exactement plusieurs ensembles de buffers correspondant à plusieurs trames.

Le premier et le second processeur MP₁ et MP₂ exécutent leur travail sur instructions respectivement d'un logiciel de communication CNS (voir plus haut) et d'un micrologiciel AML.

Lors de la mise sous tension du contrôleur de communication CCS, le logiciel de communication CNS et le micrologiciel AML qui sont implantés sur les mémoires à disque MD du concentrateur CONC, sont chargés dans respectivement chacune des mémoires vives MV₁ et MV₂. Ce chargement s'effectue à travers le bus PSB. Bien entendu, ce chargement a lieu une fois que la carte correspondant au contrôleur de communication CCS a été initialisée. Cette initialisation s'effectue sous la conduite d'un programme micrologiciel stocké dans une mémoire programmable de type PROM implantée dans l'unité de base BA et non représentée à la figure 1 et à la figure 2 pour simplifier.

Le logiciel de communication est en fait le système d'exploitation du contrôleur de communication CCS (il constitue l'operating system, selon la terminologie anglo-saxonne). Ce logiciel organise le travail de liaison entre l'hôte HOST et le micrologiciel AML qui est chargé plus spécifiquement d'effectuer le transfert de chacunes des trames dans les canaux C₁ à C₆.

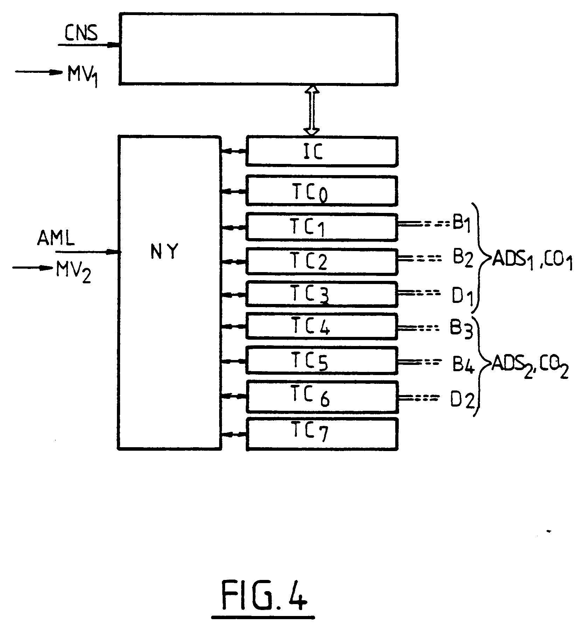

On considère la figure 4 qui montre de façon fort schématique les liaisons existant entre le logiciel de communication CNS et le micrologiciel AML.

Le micrologiciel AML comprend un noyau NY, une interface de communication IC permettant le dialogue entre le logiciel de communication CNS et le micrologiciel AML, ainsi qu'une pluralité de modules micrologiciels, encore appelés tâches, à savoir TC₀, TC₁, TC₂, ..., TC₇. Les modules micrologiciels TC₁ à TC₆ correspondent chacun aux canaux C₁ à C₆ définis plus haut. Ils sont donc chargés d'effectuer le transfert des trames affectées à chacun de ces canaux depuis la mémoire MV₁ vers la partie périphérique PER et réciproquement. Les tâches TC₀ et TC₇ sont propres à la carte portant le contrôleur CCS. Ainsi, la tâche TC₇ sert à configurer les canaux RNIS, C₁ à C₆. Cela signifie, qu'au lieu, par exemple d'utiliser chacun des deux canaux C₁ et C₂ à 64 kbs traité respectivement par SCC₁ et SCC₂, on peut vouloir n'utiliser qu'un seul canal C₁ + C₂, à 128 kbs traité par le seul contrôleur SCC₁ (SCC₂ étant alors inactif). TC₇ est donc chargé de mettre en oeuvre une telle configuration, si nécessaire. Le rôle de TC₆ sera expliqué plus loin.

Chaque tâche correspondant à un canal est une tâche indépendante des autres. Le déroulement des tâches est organisé en temps réel, par le noyau NY.

Le micrologiciel AML qui reçoit ses commandes du logiciel de communication installé dans la mémoire MV₁, est vu par celui-ci comme un ensemble de 8 tâches indépendantes. Néanmoins, les tâches TC₀ à TC₇ peuvent fonctionner simultanément sous la conduite du noyau NY. Chacune de ces tâches a donc des liaisons directes avec le noyau NY mais n'en a aucune avec les autres.

Le module micrologiciel IC gère l'interface avec le logiciel CNS. Il acquitte les demandes provenant de celui-ci et les aiguille vers les différentes tâches correspondant aux différents canaux pour que celles-ci soient exécutées. Symétriquement, il se charge des transferts d'états ou de données provenant des canaux correspondant à chacune des tâches, destinées au logiciel CNS.

Les échanges entre l'unité de base BA et l'unité périphérique PER se définissent par des descripteurs de commande. Un descripteur de commande correspond à une trame déterminée et définit les opérations qui doivent être accomplies sur cette trame (voir plus loin).

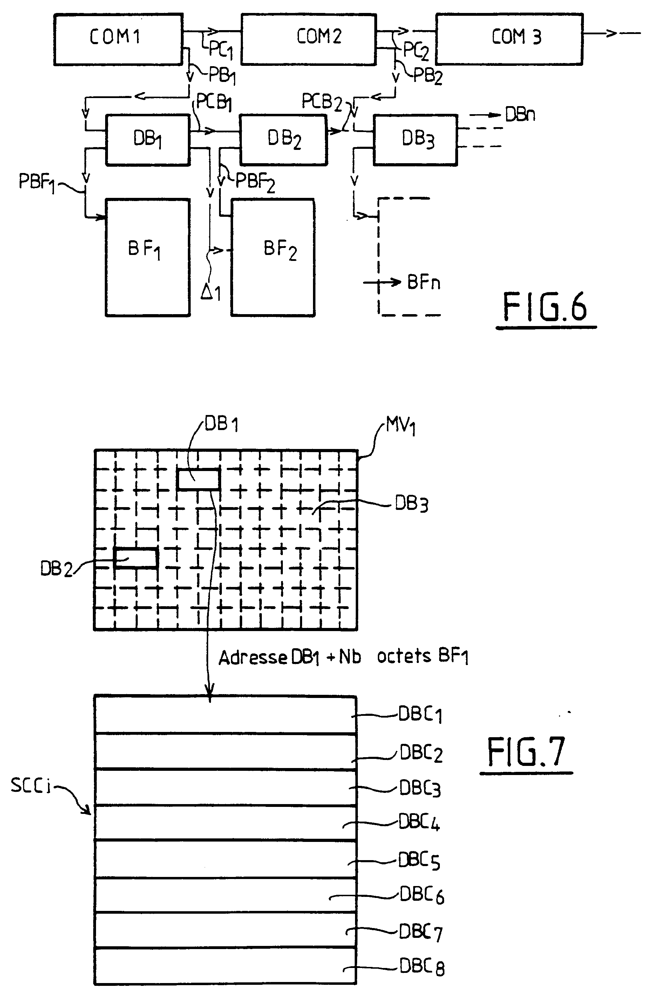

Les descripteurs de commande occupent en mémoire MV₁ des emplacements aléatoires déterminés par le logiciel de communication CNS. Les adresses physiques de ces emplacements et les emplacements correspondants eux-mêmes ne sont pas libérés tant que les trames associées à ces descripteurs de commande ne sont pas acquittées (n'ont pas été envoyées en totalité s'il s'agit d'une émission ou non pas été reçues en totalité s'il s'agit d'une réception). Ainsi, à une trame TR₁ correspond un descripteur de commande COM₁ (voir figure 6), à une trame TR₂ correspond un descripteur de commande COM₂ , à une trame TR₃ correspond un descripteur de commande COM₃, etc... .

Pour un même canal C₁ à C₆, les descripteurs de commande sont chaînés par l'intermédiaire de pointeurs de chaînage.

Autrement dit, le descripteur de commande COM₁ est chaîné au descripteur COM₂ par un pointeur de chaînage PC₁, le descripteur de commande COM₂ est chaîné au descripteur de commande COM₃ par un pointeur de chaînage PC₂. Un pointeur de chaînage n'est autre que l'adresse logique occupée par le descripteur de commande qui suit le descripteur contenant le pointeur de chaînage. Ainsi, le pointeur de chaînage PC₁ indique l'adresse logique du descripteur de commande COM₂ et le pointeur de chaînage PC₂ indique l'adresse logique du descripteur de commande COM₃, etc ... .

On sait qu'une trame est composée d'une pluralité de paquets de données ou encore buffers. Dans l'exemple de réalisation décrit ici, chaque buffer comprend au maximum 200 octets. Par exemple, la trame TR₁ comprend (voir également figure 6) les buffers BF₁, BF₂, ..., BFₙ. De même, la trame TR₁₁ est composée des buffers BF₁₁ à BFₘ. A chaque buffer correspond un emplacement physique déterminé en mémoire défini par un descripteur de buffer. Ainsi, aux buffers BF₁ à BFₙ correspondent les descripteurs de buffer DB₁ à DBₙ. De même, aux buffers BF₁₁ à BFₘ correspondent les descripteurs de buffer DB₁₁ à DBₘ. Bien entendu, les descripteurs de buffer occupent dans la mémoire MV₁ où ils sont situés des emplacements physiques différents des buffers auxquels ils sont associés. Ainsi, DB₁ occupe-t-il en mémoire un emplacement différent du buffer BF₁ etc.

Par ailleurs, par abus de langage, l'homme de l'art affecte la même dénomination aux buffers qu'aux emplacements physiques qui leur sont affectés en mémoire MV₁. Ainsi, par exemple, BF₁ désigne aussi bien un buffer ou paquet de données que l'emplacement physique où il est stocké en mémoire MV₁. Contenant et contenu ont donc la même désignation et ceci vaut également pour les descripteurs de commande et descripteurs de buffer.

Chaque descripteur de commande comprend un pointeur vers le descripteur du premier buffer physique correspondant au premier paquet de données de la trame. Ainsi, le descripteur de commande COM₁ contient le pointeur PB₁ définissant l'adresse du descripteur de buffer DB₁, c'est-à-dire l'adresse de l'emplacement physique occupé par ce descripteur dans la mémoire MV₁. De même, le descripteur de commande COM₂ contient le pointeur PB₂ définissant l'emplacement physique du descripteur de buffers DB₁₁.

Chaque descripteur de buffer contient un pointeur vers le descripteur de buffer suivant. Ainsi, le descripteur de buffer DB₁ contient le pointeur PCB₁ définissant l'adresse, c'est-à-dire l'emplacement physique occupé par le descripteur de buffer DB₂. Ce pointeur est désigné par PCB₁.

En conclusion, un descripteur de commande, tel que COM₁ à COM₃, comprend :
- un pointeur de chaînage vers un autre descripteur de commande tel que PC₁, PC₂, etc. Ce pointeur est destiné à être utilisé par l'interface de communication IC et se trouve en tête du descripteur,
- un pointeur vers le descripteur du premier buffer physique, tel que PB₁, PB₂, etc,
- un compte d'octets total de données utiles dans la chaîne de buffers physiques, autrement dit, le nombre total d'octets que contient la trame formée par la chaîne de buffers BF₁, BF₂ à BFₙ, ou BF₁₁ à BFₘ, etc,
- un index indiquant le début réel des données dans le premier buffer physique, c'est-à-dire par exemple, l'adresse physique du début des données dans le premier buffer physique BF₁, dans la mémoire MV₁,
- un indicateur précisant si la commande est une commande immédiate : les commandes immédiates sont des commandes qui n'impliquent pas l'utilisation de paquets de données destinés à être transférés vers le réseau ou provenant de celui-ci. Ces commandes immédiates peuvent être par exemple une commande d'activation d'un canal en vue d'une réception ou une commande de désactivation de ce même canal en réception, dès qu'une trame a été complètement reçue et transmise à l'unité centrale CPU.
- un champ status qui indique le résultat de l'exécution de la commande, c'est-à-dire si la commande a été ou non correctement exécutée,
- un champ de bits de commande comportant le code de la commande : il existe plusieurs types de commandes qui seront définies ci-dessous et auxquelles correspond un code déterminé.

Outre les commandes immédiates (activation de canal en réception et désactivation de canal) définies ci-dessus, existent deux autres types de commandes, à savoir une commande pour l'émission de données et une commande de purge des commandes relative à l'émission de données, lorsque l'émission sur un canal doit être, pour une raison ou une autre, stoppée. Cette commande de purge est une commande immédiate.

Il convient de préciser que le format des descripteurs de commande est défini lors de l'initialisation de la carte portant le contrôleur de communication CCS et est défini par la tâche TC₀, c'est-à-dire le module micrologiciel correspondant au canal C₀. Une fois ce format défini lors de l'initialisation du contrôleur de communication CCS le format des descripteurs de commande est immuable.

Le format des descripteurs de buffer tels que DB₁ à DBₙ ou DB₁₁ à DBₘ est défini par le logiciel de communication CNS. Il comprend :
- un pointeur de chaînage vers le descripteur de buffers suivant, par exemple le pointeur de chaînage PCB₁. Ce pointeur est une adresse logique, définissant l'emplacement mémoire où se trouve le descripteur de buffer correspondant c'est-à-dire DB₂.
- un index définissant l'emplacement physique occupé en mémoire par le début du buffer BF₁. De même, le descripteur de buffer DB₂ contient un index définissant le début de l'emplacement physique occupé en mémoire par le buffer BF₂.

En fait, cet index de début est obtenu de la manière suivante :

L'adresse définissant l'emplacement physique occupé en mémoire MV₁ par le buffer BF₂ par exemple (le raisonnement est valable pour les autres buffers), qu'on peut également définir comme l'adresse physique du buffer BF₂ est obtenue en ajoutant à l'adresse logique définie par le pointeur PBF₂ de ce même buffer contenu dans le descripteur associé DB₂, une grandeur logique Δ₁. Ainsi, on peut écrire, si I₂ est l'index de début de BF₂, I₂ = PBF₂ + Δ₁ :
- l'index définissant la fin de l'emplacement physique occupé par le buffer physique correspondant. DB₁ contient donc l'index définissant l'emplacement physique de la fin du buffer BF₁.
- la taille totale en nombre d'octets du buffer correspondant. DB₁ contient donc le nombre total d'octets de données contenus dans le buffer BF₁.

Il convient de préciser qu'en ce qui concerne aussi bien les descripteurs de commande que les descripteurs de buffer, toute adresse logique est aussi une adresse physique.

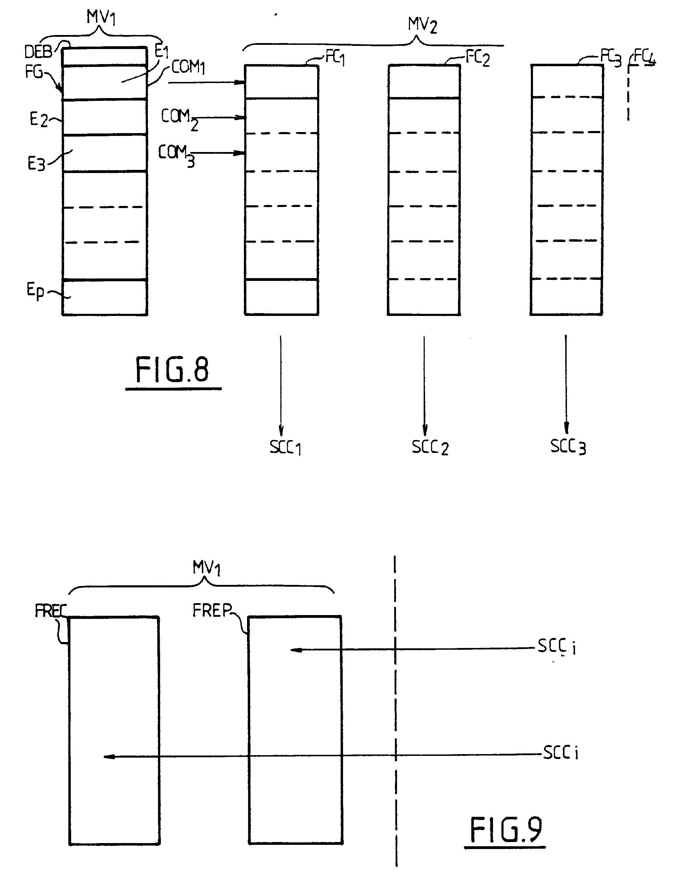

La première mémoire MV₁ contient également plusieurs zones mémoire fonctionnant suivant le principe des mémoires FIFO. Ces zones mémoire sont définies par le logiciel de communication CNS. MV₁ contient en fait, 3 zones mémoire FIFO, à savoir FG, FREC, FREP. Chacune de ces zones mémoire FIFO contient un certain nombre d'éléments, à savoir p éléments.Chaque élément contient l'adresse d'un descripteur de commande et le numéro de canal correspondant à la commande définie par ce descripteur. Le logiciel CNS, pour chaque zone mémoire FIFO, définit donc l'adresse de début de cette zone mémoire, l'index de l'élément de tête, c'est-à-dire l'adresse de l'élément de tête, l'index de l'élément de queue, c'est-à-dire l'adresse de l'élément de queue, ainsi que le nombre d'éléments contenus dans cette zone mémoire FIFO. Ainsi, par exemple, la zone mémoire FIFO FG contient les p éléments E₁, E₂, E₃, ..., Eₚ (voir figure 8). Le logiciel CNS définit donc l'adresse du début DEB de la zone FIFO FG, l'index de l'élement de tête E₁, l'index de l'élément de queue Eₚ et le nombre p d'éléments. Il en est évidemment de même pour les zones mémoires FIFO FREC, FREP qui contiennent le même nombre d'éléments p. L'élément E₁ contient donc l'adresse du descripteur de commande COM₁ ainsi que le canal correspondant à la commande définie par ce descripteur, par exemple, le canal C₁. L'élement E₂ contient l'adresse du descripteur de commande COM₂ et l'adresse du canal correspondant, ici C₁ (voir plus haut). L'élément E₃ contient l'adresse du descripteur de commande COM₃ et le canal correspondant, à savoir C₁, ..., et ainsi de suite pour les éléments E₃ à Eₚ. La seconde mémoire MV₂ contient également outre l'ensemble des microprogrammes qui ont été définis plus haut, un certain nombre de zones mémoire FIFO, en nombre égal au nombre de canaux de données, à savoir C₁ à C₆. Elle contient donc 6 zones mémoire FIFO, à savoir FC₁, FC₂, ..., FC₆. (voir figure 8).

Chacun des FIFO FC₁ à FC₆ contient l'adresse des descripteurs de commande correspondant au canal associé, ainsi que le numéro de ce canal. Ainsi, le FIFO FC₁ contient l'adresse du descripteur de commande COM₁, et le numéro du canal correspondant à ce descripteur de commande, c'est-à-dire le canal C₁, ainsi que l'adresse de COM₂ et le numéro du canal C₁, etc ... .

Les informations que contiennent chacun des FIFO FC₁ à FC₆, telles que définies ci-dessus, sont transférées dans celles-ci depuis la mémoire FIFO FG de MV₁ dans les conditions qui seront décrites plus loin, en liaison avec le fonctionnement du contrôleur de communication CCS selon l'invention. Par ailleurs, les informations contenues dans chacun des FIFO FC₁ à FC₆ sont transférées dans les contrôleurs de communication série SCC₁ à SCC₆ dans des conditions qui seront définies plus loin.

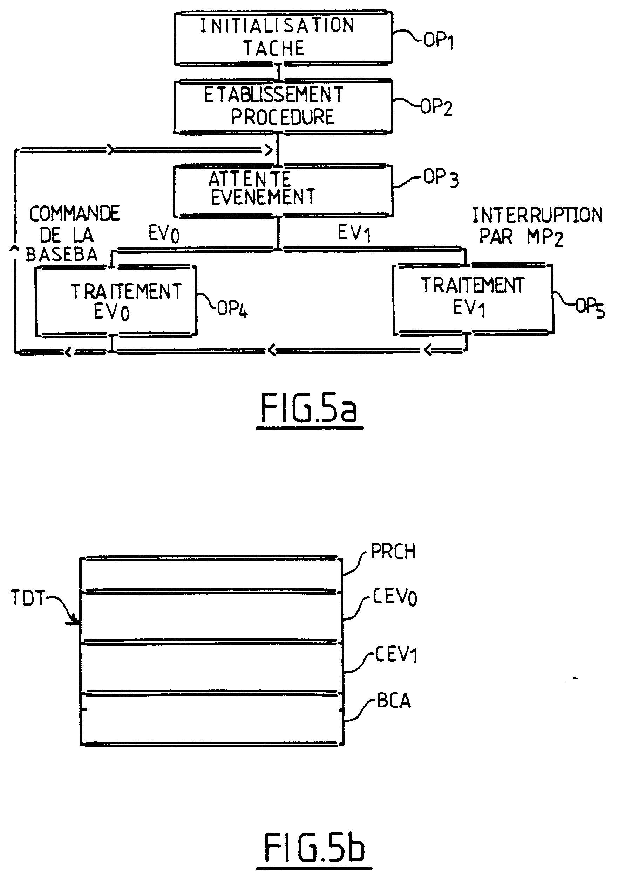

On considère désormais les figures 5 et 6.

On considère la figure 5 qui est un schéma logique simplifié des différentes opérations OP₁ à OP₅ mises en oeuvre lors de l'exécution de chacune des tâches TC₁ à TC₆.

L'opération OP₁ est une opération d'initialisation de la tâche effectuée par le noyau NY.

L'opération OP₂ qui succède à l'opération OP₁ permet d'établir chacune des procédures pouvant être mise en oeuvre par la tâche TCᵢ (TC₁ à TC₆), c'est-à-dire soit une procédure d'émission de trames soit une procédure de réception de trames soit une procédure d'activation ou de désactivation du canal correspondant. Lors de cette opération, la tâche va chercher les adresses des procédures permettant de traiter soit les commandes du logiciel CNS, lors d'une demande d'émission, soit les adresses des procédures traitant les actions induites par une interruption du processeur MP₁, lorsqu'il est nécessaire de recevoir une trame provenant du réseau RE₁-RE₂.

Lors de l'opération OP₃, la tâche se met en attente d'événement. Cet événement peut être soit une commande du logiciel CNS, par exemple lorsque celui-ci veut émettre une trame vers le réseau, soit une interruption du microprocesseur MP₂, pour une réception de trame provenant du réseau. Dans le premier cas (commande du logiciel CNS) on a à faire à l'événement EV₀. Dans le second cas, on a à faire à l'événement EV₁.

La façon dont les événements EV₀ ou EV₁ se déroulent est exposée en détail plus loin dans la description en liaison avec les figures 6, 7, 8, 9, 10 et 11.

Lorsque l'une ou l'autre des opérations OP₄ ou OP₅ est terminée on revient à l'opération OP₃.

La mémoire MV₂ contient également une table de description TDT de chaque tâche TC₁ à TC₆. Cette table de description est créée dynamiquement à chaque lancement de l'une des tâches TC₁ à TC₆, c'est-à-dire qu'elle est établie chaque fois que le noyau NY fait appel à l'une des tâches TC₁ à TC₆. TDT comprend les quatre grandes parties suivantes :
- Partie PRCH : cette partie définit le protocole utilisé sur le canal. On rappelle qu'un protocole de communication est constitué par les règles d'accès aux différents terminaux constituant un réseau, règles qui régissent le dialogue entre ces derniers. Un protocole ordonnance la conversation entre ces différents terminaux sans la hiérarchiser. On connaît différents types de protocoles. L'un des plus utilisé est le protocole HDLC (de l'anglais High Level Data Link Control), normalisé selon l'avis X25 du CCICC, livre jaune, fascicule XIII.2, novembre 80 et selon les normes internationales définies par l'Organisation Internationale de la Normalisation, dite ISO, sous les désignations suivantes IS3309-2, IS4335, IS6159 et 6258. Ce protocole HDLC est plus spécifiquement utilisé dans les réseaux RE₁ et RE₂.
- Partie CEV₀ : cette partie contient les adresses des procédures traitant l'événement EV₀. Elle est construite lors de l'opération OP₂ d'établissement de la procédure.
- Partie CEV₁ : cette partie contient les adresses des procédures traitant l'événement EV₁. Elle est construite lors de l'opération OP₂.
- Partie PCA : cette partie contient les informations nécessaires à la tâche TCᵢ pour la gestion des buffers d'une trame : elle contient plus particulièrement le nombre de buffers que chacun des contrôleurs de communication série peut émettre sans interruption, en l'occurrence 8 dans l'exemple de réalisation décrit ici.

Chaque contrôleur de communication série SCC₁ à SCC₆ comprend des descripteurs de buffer en nombre égal au nombre maximum de buffers qui peuvent être émis sans interruption, c'est-à-dire 8. Ainsi, le contrôleur de communication série SCC₁ comprend les descripteurs de buffer DBC₁, DBC₂ à DBC₈. Il en est de même pour les autres contrôleurs de communication série SCC₂ à SCC₆.

Chacun de ces descripteurs de buffer DBC₁ à DBC₈ comprend l'adresse des descripteurs de buffer contenus en MV₁ correspondant au descripteur de commande dont le traitement est effectué par la tâche du canal correspondant, à savoir TC₁. Le descripteur de buffer DBC₁ comprend donc l'adresse du descripteur de buffer DB₁ correspondant au descripteur de commande COM₁, dont la commande est exécutée par la tâche TC₁ associée au canal C₁. Par ailleurs, le premier descripteur de commande du contrôleur de communication série SCC₂ comprend l'adresse du premier descripteur de buffer correspondant au descripteur de commande dont la commande est traitée par la tâche TC₂ correspondant au canal C₂.

Chacun des descripteurs de buffer des différents contrôleurs de communication série contient également le nombre d'octets que comprend le buffer correspondant. Ainsi, le descripteur de buffers DBC₁ comprend le nombre d'octets d'informations contenues dans le buffer BF₁.

Les données contenues dans chaque buffer de la mémoire MV₁ sont transmises lors de chaque émission, sur la ligne LE₁ (ou LE₂) sous la conduite de SCC₁ pour le canal C₁, SCC₂ pour C₂, etc ... .

Le fonctionnement du contrôleur de communication CCS sera mieux compris à la lumière des explications fournies ci-dessous en relation avec les figures 6 à 11.

On considère donc un événement EV₀ et on suppose que l'on veut émettre depuis CCS une trame TR₁ composée de 10 buffers BF₁ à BF₁₀ et que cette trame est émise par le canal de communication C₁, grâce à la tâche TC₁. L'émission de la trame comporte les différentes phases successives suivantes :

### Première phase PH₁ :

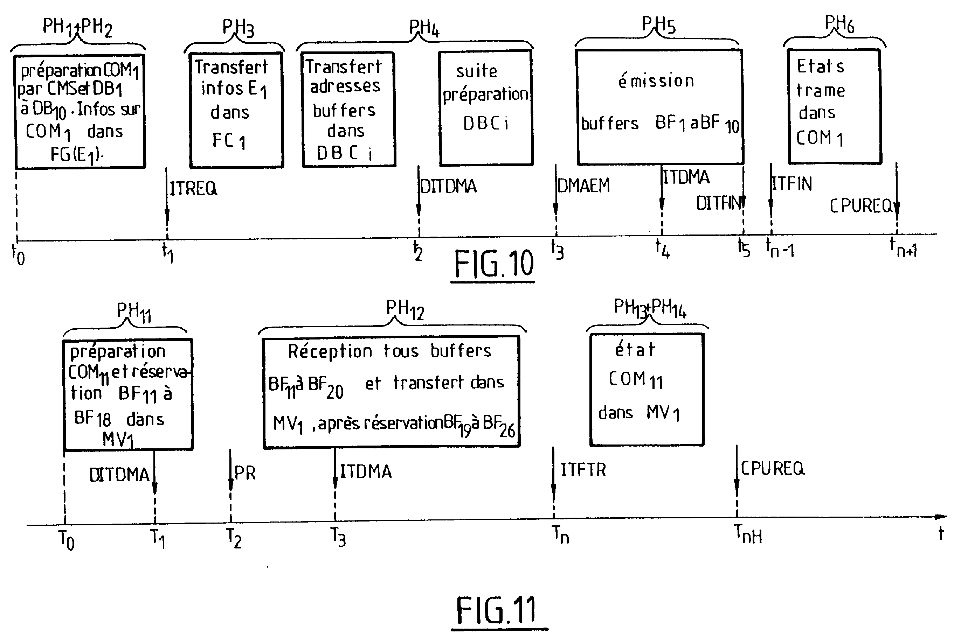

Le premier processeur MP₁ prépare, sous les instructions du logiciel de communication CNS, à partir de l'instant t₀ (figure 10) le descripteur de commande COM₁. Les informations contenues dans ce descripteur de commande vont occuper en mémoire MV₁ un emplacement physique préparé à cet effet par le logiciel CNS, lors de l'initialisation de la carte portant le contrôleur de communication selon l'invention CCS. Ainsi qu'il a été dit plus haut, à ce descripteur de commande COM₁ correspond une pluralité de descripteurs de buffer DB₁ à DB₁₀ auxquels correspondent les buffers BF₁ à BF₁₀. Les descripteurs de buffer sont donc préparés par le premier processeur MP₁. (Les emplacements physiques réservés aux descripteurs de buffer sont préparés, de même que les emplacements physiques des descripteurs de commande lors de l'initialisation de CCS). Par ailleurs, les octets correspondant aux 10 buffers de la trame TR₁ sont stockés dans chacun des emplacements physiques correspondant aux buffers BF₁ à BF₁₀. Dès que le descripteur de commande COM₁, les descripteurs de buffer DB₁ à DB₁₀ sont préparés, on passe à la phase PH₂.

### Phase PH₂ :

Le logiciel CNS met dans le FIFO FG, dans le premier élément E₁, l'adresse du descripteur de commande COM₁, ainsi que le numéro du canal correspondant, ici le numéro du canal C₁, c'est-à-dire 1. Une fois que l'élément E₁ est rempli par ces informations, le premier processeur MP₁ envoie une interruption ITREQ au second processeur MP₂, instant t₁. En ce qui concerne l'émission de la trame TR₁, le logiciel de communication CNS a fini momentanément son travail. On passe alors à la phase PH₃ .

### Phase PH₃ :

Lors de cette phase, les instructions exécutées par le processeur MP₂ sont celles de l'interface de communication IC. Dès que l'interruption ITREQ a été reçue par MP₂, le microprocesseur MP₂ transfère les informations contenues dans l'élément E₁ du FIFO FG dans le FIFO FC₁. Il est clair qu'on peut transférer dans n'importe lequel des 6 FIFOs de MV₂, à partir du FIFO FG de MV₁, des informations contenues dans les éléments de ce dernier correspondant à des descripteurs de commande associés à n'importe lequel des canaux C₁ à C₆. En effet, le processeur MP₁ sous la conduite du logiciel CNS peut préparer simultanément plusieurs trames TR₂, TR₃, etc., avec leurs descripteurs de commande et descripteurs de buffer associés. Par ailleurs, pour un même canal, par exemple pour le canal C₁, mais il est évident qu'il en est de même pour les autres, on peut transférer simultanément plusieurs adresses de descripteurs de commande ainsi que le numéro de canal correspondant dans le FIFO FC₁ correspondant à ce canal C₁. Dès que le transfert de ces informations dans les FIFOs FC₁ à FC₆ est effectué, on passe à la phase PH₄.

### Phase PH₄ :

L'interface de communication IC prévient la tâche TC₁ correspondante. Les instructions vont être alors effectuées par le second processeur MP₂ sous instructions de TC₁. La tâche TC₁ va chercher l'adresse du descripteur de commande COM₁ dans FC₁, puis va analyser le descripteur de commande lui-même dans la mémoire MV₁, pour examiner la nature de la commande, émission ou réception, ou encore commande immédiate ou non. La tâche TC₁ trouve dans ce descripteur de commande l'adresse du descripteur de buffer DB₁, va chercher dans ce descripteur de buffer l'adresse du buffer correspondant BF₁. Elle met alors l'adresse de ce dernier dans le descripteur de buffer DBC₁ de SCC₁. Elle y met également le nombre d'octets correspondant au buffer BF₁, qu'elle trouve dans le descripteur DB₁. La tâche continue ainsi à chercher les adresses des buffers BF₂ à BF₆ dans les descripteurs de buffer DB₂ à DB₆ et transfère ces informations dans les descripteurs de buffer DBC₂ à DBC₆ de SCC₁. Lorsque le DBC₆ est rempli, la tâche TC₁ fait une demande d'interruption DITDMA au processeur MP₁ (cette demande d'interruption qui a lieu après le remplissage du 6ème descripteur de buffer est prévue dans le microprogramme correspondant à cette tâche. Le fait que la demande d'interruption ait lieu après le 6ème descripteur de buffer est choisi arbitrairement. Il est évident que cette demande d'interruption pourrait avoir lieu après le remplissage d'un autre descripteur de buffer de SCC₁).

Bien que la demande d'interruption DITDMA ait eu lieu, la tâche TC₁ continue à remplir DBC₇ et DBC₈. La demande d'interruption DITDMA ayant eu lieu à l'instant t₂, dès que DBC₈ est rempli, le second processeur MP₂, sous la conduite des instructions de TC₁, envoie au SCC₁ une demande d'émission DMAEM à l'instant t₃. On passe alors à la phase PH₅ .

### Phase PH₅ :

SCC₁ va chercher les buffers BF₁ à BF₈ dans MV₁ et les émet vers le réseau RE₁-RE₂. Lorsque le 6ème buffer BF₆ a fini d'être émis, l'interruption correspondant à la demande d'interruption DITDMA est émise, et est dénommée ITDMA. Elle est émise à l'instant t₄. A partir de cet instant, pendant que SCC₁ continue à émettre les 7ème et 8ème buffers BF₇ et BF₈, la tâche TC₁ remplit les descripteurs de buffer DBC₁ et DBC₂ de SCC₁ avec l'adresse des buffers BF₉ et BF₁₀ qu'elle trouve dans les descripteurs de buffer DB₉ et DB₁₀ et avec le nombre d'octets correspondant. Lorsque le descripteur de buffer DBC₂ est ainsi rempli, la tâche TC₁ demande une interruption de fin de trame DITFIN, à l'instant t₅. Lorsque le dernier buffer BF₁₀ a été émis, alors le second processeur MP₂ émet une interruption de fin d'émission désignée par ITFIN, à l'instant tₙ. On passe alors à la phase PH₆.

### Phase PH₆ :

Aussitôt après l'interruption de fin d'émission ITFIN, la tâche TC₁ envoie dans le FIFO FREP de MV₁, le contenu du FIFO FC₁, c'est-à-dire l'adresse du descripteur de commande COM₁ plus le numéro du canal correspondant C₁. Parallèlement, la tâche envoie l'état d'émission de la trame dans le descripteur de commande COM₁ contenu dans MV₁. En effet, il y a dans le descripteur de commande un endroit prévu à cet effet, endroit qui est vide au départ, c'est-à-dire au moment où le logiciel CNS prépare COM₁ (voir phase PH₁).

Une fois cela effectué, la tâche TC₁ envoie au premier processeur MP₁ un signal signifiant que l'émission de la trame TR₁ est terminée, ce signal étant appelé CPUREQ et étant émis à l'instant tₙ₊₁. On passe alors à la phase PH₇.

### Phase PH₇ :

La tâche TC₁ va alors chercher dans FC₁ s'il existe une adresse d'un autre descripteur de commande et le numéro de canal correspondant. Si cela est le cas, on passe à la phase PH₁ pour l'émission d'une autre trame, par exemple TR₂. Si cela n'est pas le cas, on passe à l'opération OP₃, c'est-à-dire que la tâche TC₁ est mise en position d'attente d'événements.

Il est clair que les autres tâches TC₂ à TC₆ peuvent travailler en parallèle avec la tâche TC₁.

On considère désormais l'événement EV*1* et on suppose que le contrôleur CCS reçoit du réseau RE₁-RE₂, une trame TR₁₁ comprenant 10 buffers BF₁₁ à BF₂₀. On suppose en outre que le microprocesseur MP₁ autorise, sur instruction du logiciel CNS, l'activation du canal C₁ en réception. La réception de la trame TR₁₁ se déroule selon les phases successives suivantes :

### Phase PH₁₁ : (à partir de l'instant T₀)

La tâche correspondant au canal C₁, à savoir TC₁, vient s'allouer en mémoire MV₁, un emplacement libre pour un descripteur de commande, puis un emplacement libre pour un descripteur de buffer et met dans le descripteur de commande occupant cet emplacement libre, que l'on désigne par COM₁₁, l'adresse de l'emplacement physique occupé par le premier descripteur de buffer, désigné par DB₁₁, puis s'alloue en tout 8 descripteurs de buffer, à savoir DB₁₁ (déjà nommé) à DB₁₈. La tâche TC₁ chaîne entre eux ces descripteurs de buffer de la même manière qu'étaient chaînés entre eux DB₁, DB₂, etc. La tâche TC₁ s'alloue également 8 buffers correspondant chacun au descripteur de buffer, à savoir BF₁₁ à BF₁₈. Puis, elle va mettre l'adresse de chacun des buffers BF₁₁ à BF₁₈ dans les 8 descripteurs de buffer DBC₁₁ à DBC₁₈ de SCC₁, avec une demande d'interruption DITDMA₁ (instant T₁) lorsque l'adresse du buffer BF₁₆ est inscrite dans le descripteur de buffer DBC₆. Lorsque les adresses des buffers sont inscrites dans tous les descripteurs de buffer de SCC₁, la tâche TC₁ indique à SCC₁ par l'interruption PR (instant T₂) qu'elle est prête à recevoir la trame TR₁₁. On passe alors à la phase suivante PH₁₂.

### Phase PH₁₂ :

Les informations reçues du réseau RE₁ -RE₂ sont transférées directement dans les emplacement physiques de buffers BF₁₁ à BF₁₈ tant qu'il n'y a pas d'interruption de fin de trame envoyée par le terminal qui émet sur le réseau, interruption de fin de trame qui est décodée par SCC₁. A la fin du remplissage du 6ème buffer BF₁₆ correspondant au descripteur de buffer DBC₆, une interruption ITDMA₁ est émise (instant T₃ ). On réinitialise alors les descripteurs de buffer DBC₁₁ à DBC₁₆ et on leur fait correspondre 6 nouveaux emplacements physiques de buffers vides BF₁₉ à BF₂₄ dans MV₁.

On passe ensuite à la phase PH₁₃.

### Phase PH₁₃ :

Pendant la réception du dixième buffer (BF₂₀), survient l'interruption de fin de trame ITFTR (instant Tₙ). La tâche TC₁ vient mettre dans le descripteur de commande COM₁₁ l'état de la trame reçue, C'est-à-dire indique si cette trame a été correctement reçue et présente ou non des erreurs, ainsi que le nombre total d'octets que celle-ci contient. On passe ensuite à la phase suivante PH₁₄.

### Phase PH₁₄ :

La tâche TC₁ met dans le FIFO FREC de la première mémoire MV₁ l'adresse du descripteur de commande COM₁₁ ainsi que le numéro de canal correspondant à ce descripteur, c'est-à-dire 1. On passe ensuite à la phase PH₁₅ .

### Phase PH₁₅ :

La tâche TC₁ libère les descripteurs de buffer du contrôleur de communication série SCC₁ qui sont inutilisés (BF₂₁ à BF₂₄) et qui avaient été préparés à la suite de l'interruption ITDMA₁. Dès qu'ils sont libérés, le processeur MP₂ émet vers le premier processeur une interruption CPUREQ (instant Tₙ₊₁) qui signifie que la totalité de la trame TR₁₁ est transférée dans les buffers de MV₁. La trame TR₁₁ est alors à la disposition du logiciel CNS.

## Revendications

1. Contrôleur de communication (CCS) entre au moins un système hôte (HOST) associé à un bus (PSB) et une pluralité de terminaux d'au moins un réseau (RE₁-RE₂), reliés entre eux par l'intermédiaire d'au moins une liaison numérique multiplexée temporellement (S₀) comprenant une pluralité n de canaux de données (C₁ à C₆) gérés selon des protocoles déterminés et supportés par au moins une ligne de transmission (LE₁-LR₁, LE₂-LR₂), comprenant :
- une unité de base (BA) reliée au bus (PSB), qui gère et effectue le transfert des trames (TR₁ à TR₂ ...) sur l'ensemble des canaux de la liaison (C₁ à C₆),
- une unité périphérique (PER) reliée d'une part à l'unité de base (BA) et d'autre part à la ligne de transmission, assurant le multiplexage et le démultiplexage temporel des différents canaux de données de la liaison, transmettant les données au réseau ou les recevant de celui-ci,
caractérisé en ce que l'unité de base (BA) comprend :
- un premier processeur de commande (MP₁ ) de transfert des trames depuis l'hôte vers le réseau (RE₁ -RE₂ ) et réciproquement, connecté au bus et associé à une première mémoire (MV₁) de stockage des trames avant leur transfert, qui gère le transfert des trames vers les différents canaux affectés à celles-ci,
- un second processeur (MP₂ ) communiquant avec le premier, effectuant le transfert de chacune des trames (TR₁, TR₁₁ ), canal par canal, depuis la première mémoire (MV₁ ) jusqu'à l'unité périphérique puis le réseau, et réciproquement,
- la partie périphérique (PER) comprenant un coupleur (CO, CO₁-CO₂) pour l'ensemble des canaux, piloté par le second processeur (MP₂) et relié à la ligne de transmission, et recevant les données de chaque trame, paquet par paquet, (buffer par buffer), provenant de ou allant vers la première mémoire (MV₁) et assurant le multiplexage ou le démultiplexage des données à l'émission ou à la réception.

2. Contrôleur de communication (CCS) selon la revendication 1, caractérisé en ce que le premier processeur (MP₁) exécute son travail sur instructions d'un logiciel de communication (CNS) qui est inscrit, lors de l'initialisation du contrôleur (CSS), dans la première mémoire (MV₁).

3. Contrôleur de communication selon la revendication 2, caractérisé en ce que à l'émission le premier processeur (MP₁) reçoit les trames venant du bus, les divise ,en une pluralité de paquets (BF₁...BFₙ) qu'il stocke de manière aléatoire dans la première mémoire en une pluralité d'emplacements physiques différents, avant que ces paquets ne soient transférés par le second processeur vers le réseau (RE₁-RE₂).

4. Contrôleur de communication selon la revendication 2, caractérisé en ce que, en réception, le premier processeur (MP₁) reçoit du réseau, via le coupleur (C0, C0₁ -C0₂) , les trames sous forme d'une pluralité de paquets qu'il stocke de manière aléatoire dans la première mémoire (MV₁), avant de les envoyer, via le bus (PSB) vers le système hôte (HOST).

5. Contrôleur de communication selon l'une des revendications 2, 3, 4 caractérisé en ce que le second processeur (MP₂) exécute son travail sur instructions d'une architecture micrologicielle (AML), qui est inscrite, lors de l'initialisation du contrôleur, dans une seconde mémoire (MV₂) associée au second processeur (MP₂).

6. Contrôleur de communication selon la revendication 5, caractérisé en ce que l'architecture micrologicielle (AML) comprend un noyau (NY), une interface de communication (IC) permettant le dialogue entre le logiciel de communication (CNS) et l'architecture (AML) et une pluralité de modules micrologiciels ou tâches (TC₀, TC₁...TC₇) en nombre au moins égal à celui des canaux, chaque canal étant associé à un module, lequel effectue le transfert des trames affectées à ce canal, depuis la première mémoire (MV₁) vers le réseau via la partie périphérique et réciproquement, chaque module ou tâche étant indépendant des autres, son déroulement étant organisé en temps réel par le noyau NY.

7. Contrôleur suivant la revendication 6 caractérisé en ce que l'interface de communication (IC) communique d'une part avec le noyau (NY) et d'autre part avec le logiciel de communication (CNS), acquitte les demandes provenant de ce dernier et les aiguille, via le noyau (NY), vers les différentes tâches (TC₀ à TC₇) correspondant aux différents canaux pour que ces dernières soient exécutées.

8. Contrôleur suivant la revendication 7, caractérisé en ce que l'interface de communication (IC) effectue via le noyau (NY) les transferts d'états et de données provenant des canaux (C₁ à C₆) correspondant à chacune des tâches vers le logiciel de communication (CNS).

9. Contrôleur suivant l'une des revendications 5 et 6, caractérisé en ce que les échanges entre l'unité de base (BA) et l'unité périphérique (PER) se définissent par des descripteurs de commande (COM₁, COM₂, COM₃, ...) correspondant chacun à une trame déterminée et définissant les opérations devant être accomplies sur cette trame, lesquels sont stockés de manière aléatoire dans la première mémoire.

10. Contrôleur suivant la revendication 9, caractérisé en ce que les descripteurs de commande correspondent à des trames affectées à un même canal, sont chaînés entre eux par des pointeurs de chaînage (PC1, PC2, ...), le pointeur d'un descripteur donné indiquant l'adresse logique du descripteur suivant.

11. Contrôleur suivant la revendication 10, caractérisé en ce que chaque descripteur de commande (COM₁, COM₂) pointe sur un descripteur de buffer (DB₁, DBₙ) définissant les caractéristiques du premier buffer (BF₁) de la trame associée au descripteur de commande (COM₁), chacun des buffers d'une trame étant associé à un descripteur de buffer, les descripteurs de buffers étant chaînés entre eux par des pointeurs de buffer (PCB₁, PCB₂, ...) définissant chacun l'adresse logique du descripteur de buffer chaîné à celui comportant ce même pointeur, chacun des descripteurs de buffer pointant vers le buffer correspondant par un pointeur de buffer définissant l'adresse logique de ce buffer en première mémoire (MV₁), les emplacements physiques des descripteurs de buffer et des buffers étant définis aléatoirement par le premier processeur.

12. Contrôleur suivant l'une des revendications 9, 10, 11, caractérisé en ce que le coupleur (C0) comprend une pluralité de contrôleurs de communication série, effectuant le multiplexage et démultiplexage des données, les sérialisant ou déssérialisant, chaque contrôleur série étant associé à au moins un canal et comportant des descripteurs de buffer (DBC₁ à DBC₈) correspondant chacun à un descripteur de buffer de la première mémoire (DB₁ à DBₙ) et indiquant l'adresse de ce dernier et le nombre d'octets que celui-ci contient.

13. Contrôleur selon l'une des revendications 9 à 12, caractérisé en ce que la première mémoire (MV₁) comprend une première zone mémoire FIFO (FG) comprenant p éléments contenant chacun l'adresse d'un descripteur de commande (COM₁, COM₂) et le numéro de canal (C₁ à C₆) affecté à la trame associée à ce descripteur de commande, la seconde mémoire (MV₂) comprenant des zones mémoires FIFO associées chacune à un canal de donnée déterminé, contenant chacune les adresses de tous les descripteurs de commande correspondant aux trames affectées au canal qui leur est associé ainsi que le numéro de ce canal.

## Patentansprüche

1. Einrichtung (CCS) zum Steuern der Datenübertragung zwischen wenigstens einem einem Bus (PSB) zugeordneten Hostsystem (HOST) und einer Vielzahl von Endgeräten wenigstens eines Netzes (RE₁ - RE₂), die untereinander durch wenigstens eine digitale Zeitmultiplex-Verbindung (S₀) verbunden sind, die eine Vielzahl n von Datenkanälen (C₁ bis C₆) enthält, die nach vorbestimmten Protokollen verwaltet und von wenigstens einer Übertragungsleitung (LE₁ - LR₁, LE₂ - LR₂) unterhalten werden, mit:
- einer mit dem BUS (PSB) verbundenen Basiseinheit (BA), die die Übertragung der Raster (TR₁ bis TR₂ ...) über die Einheit von Kanälen (C₁ bis C₆) der Verbindung steuert und bewirkt,
- einer peripheren Einheit (PER), die einerseits mit der Basiseinheit (BA) und andererseits mit der Übertragungsleitung verbunden ist, und die den Zeitmultiplex- und Zeitdemultiplex-Betrieb der unterschiedlichen Datenkanäle der Verbindung sicherstellt, über die die Daten zu dem Netz übertragen oder von diesem empfangen werden,
dadurch gekennzeichnet, daß die Basiseinheit (BA) folgendes enthält:
- einen ersten Steuerprozessor (MP₁) für die Übertragung der Raster von dem Host zu dem Netz (RE₁ - RE₂) und umgekehrt, der mit dem Bus verbunden und einem ersten Speicher (MV₁) zum Speichern der Raster vor ihrer Übertragung zugeordnet ist, und der die Übertragung der Raster zu den unterschiedlichen, diesen zugeordneten Kanälen steuert,
- einen zweiten Prozessor (MP₂), der mit dem ersten in Verbindung steht und die Übertragung eines jeden der Raster (TR₁, TR₁₁) kanalweise von dem ersten Speicher (MV₁) bis zu der peripheren Einheit und dann dem Netz, und umgekehrt, bewirkt,
- wobei der periphere Teil (PER) einen Koppler (CO, CO₁ - CO₂) für die Einheit der Kanäle enthält, der von dem zweiten Prozessor (MP₂) gesteuert und mit der Übertragungsleitung verbunden ist, und der die Daten von jedem Raster Paket für Paket (Puffer für Puffer) empfängt, die von dem ersten Speicher (MV₁) stammen oder zu diesem laufen, und der das Multiplexen oder das Demultiplexen der Daten beim Aussenden oder beim Empfang sicherstellt.

2. Datenübertragungs-Steuereinrichtung (CCS) nach Anspruch 1, dadurch gekennzeichnet, daß der erste Prozessor (MP₁) nach Instruktionen einer Datenübertragungs-Software (CNS) arbeitet, die bei der Initialisierung der Steuereinrichtung (CSS) in den ersten Speicher (MV₁) eingeschrieben wird.

3. Datenübertragungs-Steuereinrichtung nach Anspruch 2, dadurch gekennzeichnet, daß beim Senden der erste Prozessor (MP₁) die von dem Bus kommenden Raster empfängt, diese in eine Vielzahl von Paketen (BF₁ ... BFₙ) teilt und diese auf eine auf Zufall beruhende Weise in dem ersten Speicher an einer Vielzahl von unterschiedlichen physischen Stellen speichert, bevor diese Pakete durch den zweiten Prozessor zu dem Netz (RE₁ - RE₂) übertragen werden.

4. Datenübertragungs-Steuereinrichtung nach Anspruch 2, dadurch gekennzeichnet, daß der erste Prozessor (MP₁) beim Empfang von dem Netz über den Koppler (CO, CO₁ - CO₂) die Raster in Form einer Vielzahl von Paketen empfängt, die er in einer auf Zufall beruhenden Weise in dem ersten Speicher (MV₁) vor deren Aussenden über den Bus (PSB) zu dem Hostsystem (HOST) speichert.

5. Datenübertragungs-Steuereinrichtung nach einem der Ansprüche 2, 3, 4, dadurch gekennzeichnet, daß der zweite Prozessor (MP₂) nach Instruktionen (AML) von einer Mikrosoftware-Architektur arbeitet, die bei der Initialisierung der Steuereinrichtung in einen zweiten, dem zweiten Prozessor (MP₂) zugeordneten Speicher (MV₂) eingeschrieben wird.

6. Datenübertragungs-Steuereinrichtung nach Anspruch 5, dadurch gekennzeichnet, daß die Mikrosoftware-Architektur (AML) einen Kern (NY), eine Datenübertragungsschnittstelle (IC), die einen Dialog zwischen der Datenübertragungs-Software (CNS) und der Architektur (AML) ermöglicht, und eine Vielzahl von Mikrosoftware- oder Task-Modulen (TC₀, TC₁ ... TC₇) in einer Anzahl enthält, die wenigstens gleich der der Kanäle ist, wobei jeder Kanal einem Modul zugeordnet ist, der Übertragung der diesem Kanal zugeordneten Raster von dem ersten Speicher (MV₁) zu dem Netz über den peripheren Teil und umgekehrt bewirkt, und wobei jeder Modul oder jede Task von den anderen unabhängig ist und sein Ablauf durch den Kern NY in Echtzeit organisiert ist.

7. Steuereinrichtung nach Anspruch 6, dadurch gekennzeichnet, daß die Datenübertragungsschnittstelle (IC) einerseits mit dem Kern (NY) und andererseits mit der Datenübertragungs-Software (CNS) in Verbindung steht und die von dieser letzteren stammenden Anforderungen erfaßt und sie über den Kern (NY) zu den den verschiedenen Kanälen entsprechenden verschiedenen Tasks (TC₀ bis TC₇) leitet, damit diese letzteren ausgeführt werden.

8. Steuereinrichtung nach Anspruch 7, dadurch gekennzeichnet, daß die Datenübertragungsschnittstelle (IC) über den Kern (NY) die Übertragungen von Zuständen und Daten von den einer jeweiligen Task entsprechenden Kanälen (C₁ bis C₆) zu der Datenübertragungs-Software (CNS) bewirkt.

9. Steuereinrichtung nach einem der Ansprüche 5 und 6, dadurch gekennzeichnet, daß die Austauschvorgänge zwischen der Basiseinheit (BA) und der peripheren Einheit (PER) durch jeweils einem bestimmten Raster entsprechende Befehlsdeskriptoren (COM₁, COM₂, COM₃, ...) bestimmt sind und die Operationen definieren, bevor diese bei diesem Raster ausgeführt werden, wobei diese auf eine auf Zufall beruhende Weise in dem ersten Speicher gespeichert werden.

10. Steuereinrichtung nach Anspruch 9, dadurch gekennzeichnet, daß die Befehlsdeskriptoren, die einem gleichen Kanal zugeordneten Raster entsprechen, durch Verkettungszeiger (PC1, PC2, ...) untereinander verkettet sind, wobei der Zeiger eines gegebenen Deskriptors die logische Adresse des folgenden Deskriptors angibt.

11. Steuereinrichtung nach Anspruch 10, dadurch gekennzeichnet, daß jeder Befehlsdeskriptor (COM₁, COM₂) auf einen Pufferdeskriptor (DB₁, DB₂) zeigt, der die charakteristischen Eigenschaften des ersten Puffers (BF₁) des dem Befehlsdeskriptor (COM₁) zugeordneten Rasters definiert, wobei jedem Puffer eines Rasters ein Pufferdeskriptor zugeordnet ist, die Pufferdeskriptoren untereinander durch Pufferzeiger (PCB₁, PCB₂, ...) verkettet sind, die jeweils die logische Adresse des Pufferdeskriptors definieren, der mit dem verkettet ist, der diesen gleichen Zeiger aufweist, jeder der Pufferdeskriptoren zu dem entsprechenden Puffer durch einen Pufferzeiger verweist, der die logische Adresse dieses Puffers im ersten Speicher (MV₁) definiert, und wobei die physischen Stellen der Pufferdeskriptoren und der Puffer auf eine auf Zufall beruhende Weise durch den ersten Prozessor definiert sind.

12. Steuereinrichtung nach einem der Ansprüche 9, 10, 11, dadurch gekennzeichnet, daß der Koppler (CO) eine Vielzahl von Serien-Datenübertragungs-Steuereinrichtungen enthält, die das Multiplexen und Demultiplexen der Daten bewirken, wobei diese in eine serielle Form oder ausgehend davon in eine nicht serielle Form gebracht werden, wobei jeder Serien-Steuereinrichtung zumindest ein Kanal zugeordnet ist und jede Serien-Steuereinrichtung Pufferdeskriptoren (DBC₁ bis DBC₈) enthält, die jeweils einem Pufferdeskriptor des ersten Speichers (DB₁ bis DBₙ) entsprechen und die Adresse dieses letzteren sowie die Anzahl von Oktetten angeben, die dieser enthält.

13. Steuereinrichtung nach einem der Ansprüche 9 bis 12, dadurch gekennzeichnet, daß der erste Speicher (MV₁) eine erste Speicherzone FIFO (FG) mit p Elementen enthält, die jeweils die Adresse eines Befehlsdeskriptors (COM₁, COM₂) und die Nummer des Kanals (C₁ bis C₈) enthalten, der dem diesem Befehlsdeskriptor zugewiesenen Raster zugeordnet ist, wobei der zweite Speicher (MV₂) Speicherzonen FIFO enthält, die jeweils einem vorbestimmten Datenkanal zugeordnet sind und jeweils die Adressen aller Befehlsdeskriptoren, die den Rastern entsprechen, die dem ihnen zugeordneten Kanal zugewiesen sind, sowie die Nummer dieses Kanals enthalten.

## Claims

1. A controller (CCS) for communication between at least one host system (HOST) associated with a bus (PSB) and a plurality of terminals of at least one network (RE₁-RE₂), connected together via at least one digital line multiplexed by time division (S₀) comprising a plurality n of data channels (C₁ to C₆) managed according to protocols determined and supported by at least one transmission line (LE₁-LR₁, LE₂-LR₂), comprising
- a base unit (BA) linked to the bus (PSB), which manages and performs the transfer of the frames (TR₁ to TR₂...) over all the channels in the line (C₁ to C₆),
- a peripheral unit (PER) linked on the one hand to a base unit (BA) and on the other hand to the transmission line, providing time-division multiplexing and demultiplexing of the various data channels, transmitting the data to the network or receiving them from the latter,
characterised in that the base unit (BA) comprises:
- a first command processor (MP₁) for transferring frames from the host to the network (RE₁-RE₂)and vice versa, connected to the bus and associated with a first memory (MV₁) for storing the frames before their transfer, which manages the transfer of the frames to the various channels allocated thereto,
- a second processor (MP₂) communicating with the first, performing the transfer of each of the frames (TR₁,TR₁₁), channel by channel, from the first memory (MV₁)to the peripheral part then the network, and vice versa,
- the peripheral part (PER) comprising a coupler (CO, CO₁-CO₂) for all the channels, this coupler being piloted by the second processor (MP₂), connected to the transmission line and receiving the data of each frame, packet by packet (buffer by buffer), coming from or going to the first memory (MV₁), ensuring the multiplexing or demultiplexing of the data on transmission or on reception.

2. A communications controller (CCS) according to Claim 1, characterised in that the first processor (MP₁) performs its work on the instructions of communications software (CNS) which is recorded, when the controller (CSS) is initialised, in the first memory (MV₁).

3. A communications controller according to Claim 2, characterised in that on transmission the first processor (MP₁) receives the frames coming from the bus, divides them into a plurality of packets (BF₁ ... BFₙ) which it stores at random in the first memory in a plurality of different physical locations, before these packets are transferred by the second processor to the network (RE₁-RE₂).

4. A communications controller according to Claim 2, characterised in that, on reception, the first processor (MP₁) receives from the network, via the coupler (CO, CO₁-CO₂), the frames in the form of a plurality of packets which it stores at random in the first memory (MV₁), before sending them via the bus (PSB) to the host system (HOST).

5. A communications controller according to one of Claims 2, 3, 4, characterised in that the second processor (MP₂) performs its work on the instructions of a firmware architecture (AML), which is recorded, when the controller is initialised, in a second memory (MV₂) associated with the second processor (MP₂).

6. A communications controller according to Claim 5, characterised in that the firmware (AML) comprises a core (NY), a communication interface (IC) allowing dialogue between the communications software (CNS) and the architecture (AML) and a plurality of firmware modules or tasks (TC₀, TC₁ ... TC₇) at least equal in number to the channels, each channel being associated with a module, which performs the transfer of the frames allocated to that channel, from the first memory (MV₁) to the network via the peripheral part and vice versa, each module or task being independent of the others, its progress being organised in real time by the core NY.

7. A controller according to Claim 6 characterised in that the communication interface (IC) communicates on the one hand with the core (NY) and on the other hand with the communications software (CNS), acknowledges requests coming from the latter and routes them, via the core (NY), to the various tasks (TC₀ to TC₇) corresponding to the various channels so that they can be performed.

8. A controller according to Claim 7, characterised in that the communication interface (IC) performs via the core (NY) the transfers of states and data coming from the channels (C₁ to C₅) corresponding to each of the tasks, to the communications software (CNS).

9. A controller according to one of Claims 5 and 6, characterised in that the exchanges between the base unit (BA) and the peripheral unit (PER) are defined by command descriptors (COM₁, COM₂, COM₃, ...) each corresponding to a given frame and defining the operations that have to be accomplished on this frame, which are stored at random in the first memory.

10. A controller according to Claim 9, characterised in that the command descriptors correspond to frames allocated to the same channel, are chained together by link pointers (PC₁, PC₂, ...), the pointer of a given descriptor indicating the logical address of the following descriptor.

11. A controller according to Claim 10, characterised in that each command descriptor (COM₁, COM₂) targets a buffer descriptor (DB₁, DBₙ) defining the characteristics of the first buffer (BF₁) of the frame associated with the command descriptor (COM₁), each of the buffers of a frame being associated with a buffer descriptor, the buffer descriptors being chained together by buffer pointers (PCB₁, PCB₂, etc.) defining each logical address of the buffer descriptor chained to that comprising the same pointer, each of the buffer descriptors targeting the corresponding buffer by a buffer pointer defining the logical address of that buffer in the first memory (MV₁), the physical locations of the buffer descriptors and of the buffers being defined at random by the first processor.

12. A controller according to one of Claims 9,10 or 11, characterised in that the coupler (CO) comprises a plurality of serial communications controllers, performing the multiplexing and demultiplexing of data, serialising and deserialising them, each serial controller being associated with at least one channel and comprising buffer descriptors DBC₁ to DBC₈) each corresponding to a buffer descriptor of the first memory (DB₁ to DBₙ) and indicating the address of the latter and the number of bytes it contains.

13. A controller according to one of Claims 9 to 12, characterised in that the first memory (MV₁) comprises a first FIFO memory zone (FG) comprising p elements each containing the address of a command descriptor (COM₁, COM₂) and the channel number (C₁ to C₆) assigned to the frame associated with this command descriptor, the second memory (MV₂) comprising FIFO memory zones each associated with a given data channel, each containing the addresses of all the command descriptors corresponding to the frames assigned to the channel that is associated with them as well as the number of that channel.
